(19) Europäisches Patentamt / European Patent Office / Office européen des brevets

(11) **EP 4 280 431 B1**

(12) **EUROPEAN PATENT SPECIFICATION**

(45) Date of publication and mention
of the grant of the patent:
**26.11.2025 Bulletin 2025/48**

(21) Application number: **21919454.5**

(22) Date of filing: **09.03.2021**

(51) International Patent Classification (IPC):
*H02P 6/04* *(2016.01)*    *H02P 6/08* *(2016.01)*
*H02P 6/34* *(2016.01)*    *G05B 11/36* *(2006.01)*
*H02P 25/06* *(2016.01)*

(52) Cooperative Patent Classification (CPC):
**G05B 11/36; H02P 6/04; H02P 6/08; H02P 6/34;**
H02P 25/06; H02P 2205/05

(86) International application number:
**PCT/JP2021/009173**

(87) International publication number:
**WO 2022/153561 (21.07.2022 Gazette 2022/29)**

(54) **DRIVE SYSTEM, CONTROL METHOD, AND CONTROL PROGRAM**

ANTRIEBSSYSTEM, STEUERUNGSVERFAHREN UND STEUERUNGSPROGRAMM

SYSTÈME D'ENTRAÎNEMENT, PROCÉDÉ DE COMMANDE ET PROGRAMME DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.01.2021 JP 2021004648**

(43) Date of publication of application:
**22.11.2023 Bulletin 2023/47**

(73) Proprietor: **OMRON Corporation
Kyoto 600-8530 (JP)**

(72) Inventors:
• **OGAWA, Atsushi
Kyoto-shi, Kyoto 600-8530 (JP)**
• **INAME, Yukio
Kyoto-shi, Kyoto 600-8530 (JP)**
• **EMMEY, Teja
Kyoto-shi, Kyoto 600-8530 (JP)**

(74) Representative: **Mewburn Ellis LLP
Aurora Building
Counterslip
Bristol BS1 6BX (GB)**

(56) References cited:
WO-A1-2019/187223    JP-A- 2007 285 429
JP-A- 2009 119 904    JP-A- 2019 209 781
JP-A- 2020 126 481    JP-A- 2020 175 729
JP-B2- 4 296 110    JP-B2- 5 780 783
JP-B2- 5 845 884    US-A- 5 342 079
US-A1- 2022 066 404

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a drive system, a control method in the drive system, and a control program for controlling the drive system.

BACKGROUND ART

As a mechanism attenuating or controlling kinetic energy generated when an object comes into contact with an object, various configurations such as an elastic body such as a spring and rubber, a damper (for example, an oil damper), and an air cylinder have been proposed and put into practical use. In addition, there is also a configuration that adopts control using sensing results by various sensors.

In the mechanism using the spring or the rubber, performance of attenuating the kinetic energy is determined depending on a physical characteristic of the incorporated spring or rubber. The performance of the damper to attenuate the kinetic energy depends on a size, an orifice diameter, and the like. The performance of the air cylinder to attenuate the kinetic energy depends on the size, air pressure, and the like. These mechanical configurations have problems that force less than or equal to its own weight cannot be controlled, a design and a mechanism corresponding to a target are required, and position accuracy is low.

In addition, there is also a configuration in which an actuator (for example, a cylinder) driven by air, a motor, or the like is controlled based on a sensing result by a sensor. As such an electrical configuration, The following prior arts exist as such an electrical configuration.

For example, Japanese Patent Laying-Open No. 2006-074987 (PTL 1) discloses a typically linear controllable source of force along a path that actively absorbs or applies energy from a vehicle wheel support assembly moving over rough surfaces to facilitate considerably reducing force transmitted to the vehicle body supported on the wheel support assembly.

Japanese Patent Laying-Open No. 2006-125633 (PTL 2) discloses a method for actively suspending an actual facility in a vehicle. The disclosed method includes modifying a control signal based on a difference between a characteristic of the actual facility as indicated by a response of the actual equipment to the control signal and a characteristic of a reference facility.

Japanese National Patent Publication No. 2013-521443 (PTL 3) discloses an active vibration preventing device configured to control a position of a body with respect to a reference frame.
JP 4296110 B2 discloses an improvement of an active suspension.
US 2018/157236 A1 discloses a servomotor controller.
JP 5 845884 B2 and JP 2020 175729 A disclose control instructions for active vibration damping device comprising an actuator and a spring in parallel.

CITATION LIST

PATENT LITERATURES

PTL 1: Japanese Patent Laying-Open No. 2006-074987
PTL 2: Japanese Patent Laying-Open No. 2006-125633
PTL 3: Japanese National Patent Publication No. 2013-521443

SUMMARY OF INVENTION

TECHNICAL PROBLEM

In the electric actuator as described above, the configuration of control logic and the like may be complicated. For example, the control logic in consideration of the characteristic of the object in mechanical contact with the actuator is required to be configured, and it takes time and effort to tune when many parameters included in the control logic exist.

One object of the present invention is to provide a drive system including an actuator capable of easily performing the configuration of the control logic, simulation for facility design, and the like.

SOLUTION TO PROBLEM

A drive system according to the present invention is defined in claim 1.

According to this configuration, a load according to an ideal spring behavior is generated from the actuator.

The determination unit may set the spring constant for each control period. According to this configuration, the optimum spring constant in each control period can be set according to the purpose and situation.

The determination unit may set the spring constant for each control period according to a predetermined pattern. According to this configuration, a pattern set according to application can be used.

The drive system may further include an encoder that is mechanically connected to the motor and detects the displacement in the actuator. According to this configuration, the displacement generated in the actuator can be easily acquired based on a rotation amount of the motor and the like.

The controller may further include a calculation unit that calculates the displacement generated in the actuator. According to this configuration, the load to be generated by the actuator can be accurately calculated.

The calculation unit may calculate displacement based on a state in which an object is attached to the actuator. According to this configuration, the ideal behavior of the spring can be implemented even when the applied load is small without being affected by mass of the object attached to the actuator.

The instruction generating unit may output a torque instruction that designates torque to be generated by the motor as the control instruction. According to this configuration, when the torque to be generated by the motor is controlled, so that the load generated by the actuator can be controlled according to the ideal behavior of the spring.

The drive system may include a plurality of actuators mechanically connected to a common member. At this point, the controller may generate the control instructions for each of the plurality of actuators such that a target load is generated from the common member. According to this configuration, the target load can be generated from the common member mechanically connected to the plurality of actuators.

According to the present invention, a control method for an actuator that is defined in claim 9.

According to the present invention, a control program for controlling an actuator that is driven by a motor to generate displacement is defined in claim 13.

## ADVANTAGEOUS EFFECTS OF INVENTION

According to one aspect of the present invention, the drive system including the actuator capable of easily performing the creation of the control logic, the simulation for facility design, and the like can be implemented.

## BRIEF DESCRIPTION OF DRAWINGS

Fig. 1 is a schematic diagram illustrating a main part of a drive system according to an embodiment.
Fig. 2 is a schematic diagram illustrating a main part of a modification in the drive system of the embodiment.
Fig. 3 is a view illustrating a behavior of an actuator configuring the drive system of the embodiment.
Fig. 4 is a schematic diagram illustrating a hardware configuration example of a controller configuring the drive system of the embodiment.
Fig. 5 is a schematic diagram illustrating a workpiece conveyance system in which the actuator of the embodiment performs an impact absorbing operation.
Fig. 6 is a view illustrating the behavior from a physical viewpoint related to the impact absorbing operation of the actuator of the embodiment.
Fig. 7 is a schematic diagram illustrating a main functional configuration implementing the impact absorbing operation by the actuator of the embodiment.
Fig. 8 is a view illustrating an elastic force generating operation of the actuator of the embodiment.
Fig. 9 is a schematic diagram illustrating the main functional configuration implementing the elastic force generating operation by the actuator of the embodiment.
Fig. 10 is a view illustrating processing for preventing generation of impact force due to contact between objects using the actuator of the embodiment.
Fig. 11 is a schematic diagram illustrating a main functional configuration implementing the impact absorbing operation and the elastic force generating operation by the actuator of the embodiment.
Fig. 12 is a flowchart illustrating an example of a processing procedure related to the impact absorbing operation and the elastic force generating operation by the actuator of the embodiment.
Fig. 13 is a schematic view illustrating an example of a stage mechanism with one degree of freedom including a plurality of actuators of the embodiment.
Fig. 14 is a schematic diagram illustrating a main functional configuration implementing the elastic force generating operation by the stage mechanism in Fig. 13(A).
Fig. 15 is a schematic view illustrating an example of a multi-degree-of-freedom stage mechanism including the plurality of actuators of the embodiment.
Fig. 16 is a schematic diagram illustrating an example of an application using the actuator of the embodiment.
Fig. 17 is a flowchart illustrating a processing procedure in an assembly device in Fig. 16.

## DESCRIPTION OF EMBODIMENT

With reference to the drawings, an embodiment of the present invention will be described in detail. The same or equivalent part in the drawings is denoted by the same reference numeral, and the description will not be repeated.

<A. Application example>

An example of a scene to which the present invention is applied will be described.

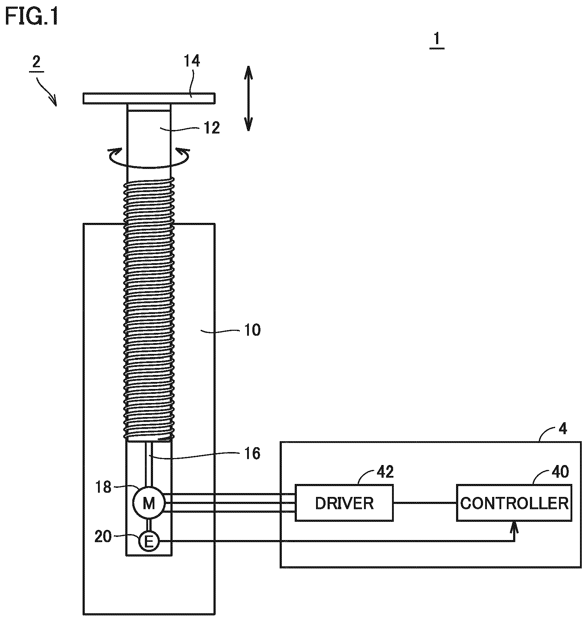

Fig. 1 is a schematic diagram illustrating a main part of a drive system 1 according to the embodiment. With reference to Fig. 1, drive system 1 includes an actuator 2 and a drive device 4.
Actuator 2 is driven by a motor 18 to generate displacement (in an example of Fig. 1, the displacement in a vertical direction on a paper surface). As actuator 2, any configuration driven by a motor may be adopted, and for example, a ball screw or a linear actuator can be used. In the following description, a case where the present invention is applied to actuator 2 mainly including the ball screw will be described as an example.

More specifically, actuator 2 includes a main body 10 including a space inside, a rod 12 that engages with a screw groove formed inside main body 10, a distal end portion 14 provided at a distal end of rod 12, a coupling member 16 that mechanically couples rod 12 and motor 18, and an encoder 20 that detects a rotation speed or a rotation angle of motor 18. Encoder 20 is mechanically connected to motor 18 and detects the displacement in actuator 2.

Drive device 4 includes a driver 42 that supplies power to motor 18 to drive motor 18 and a controller 40 that receives a detection signal from encoder 20 and gives a control instruction to driver 42.

Although Fig. 1 illustrates an example of drive system 1 including one actuator 2, a configuration including a plurality of actuators 2 can also be implemented.

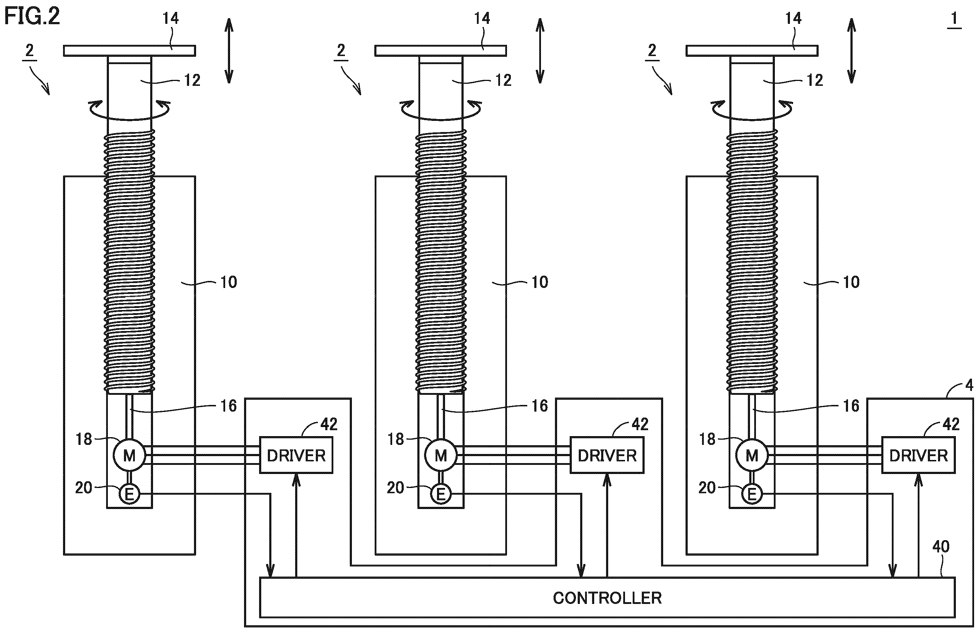

Fig. 2 is a schematic diagram illustrating a main part of a modification in drive system 1 of the embodiment. With reference to Fig. 2, drive system 1 includes three actuators 2. Drive device 4 includes three drivers 42 corresponding to respective actuators 2 and controller 40 that integrally controls three actuators 2.

The number of actuators 2 included in drive system 1 is not particularly limited, and an appropriate number may be set according to an application to be applied. For example, when an arbitrary workpiece can be supported by single actuator 2, the number of actuators 2 may be one. For a large workpiece, a member supporting the workpiece may be driven by a plurality of actuators 2.

For convenience of description, controller 40 and driver 42 are illustrated as independent components, but controller 40 and driver 42 may be mounted as independent devices or may be mounted as an integrated device.

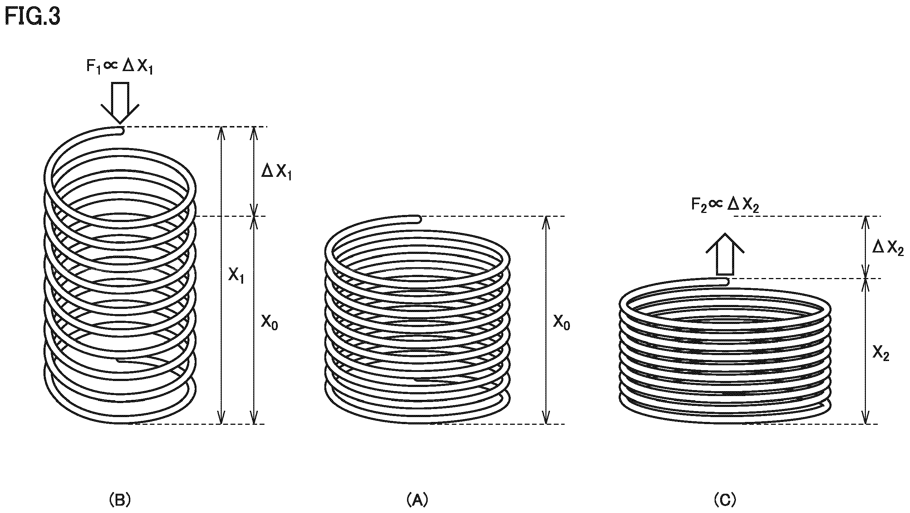

Fig. 3 is a view illustrating a behavior of actuator 2 configuring drive system 1 of the embodiment. With reference to Fig. 3, in drive system 1 of the embodiment, actuator 2 is controlled so as to achieve ideal behavior of the spring. For example, the ideal behavior of the spring is assumed to be a spring having a natural length $X_0$ in a state where no external force is applied as illustrated in Fig. 3(A).

When the spring is extended to a length $X_1$ ($= X_0 + \Delta X_1$), restoring force $F_1$ is generated in a direction in which the spring returns to original natural length $X_0$. Restoring force $F_1$ is proportional to an elongation amount $\Delta X_1$ from original natural length $X_0$. On the other hand, when the spring is contracted to a length $X_2$ ($= X_0 - \Delta X_2$), restoring force $F_2$ is generated in the direction in which the spring returns to original natural length $X_0$. Restoring force $F_2$ is proportional to a contraction amount $\Delta X_2$ from original natural length $X_0$.

As described above, in drive system 1 of the embodiment, what is called a physical spring is implemented by the control of motor 18. The implemented spring exhibits a substantially ideal behavior (behavior according to a physical formula), the creation of control logic using a simple physical model, simulation for facility design, and the like can be easily performed.

A more detailed operation example of actuator 2 of the embodiment will be described later.

<B. Hardware configuration example of controller 40>

A hardware configuration example of controller 40 configuring drive system 1 of the embodiment will be described below.

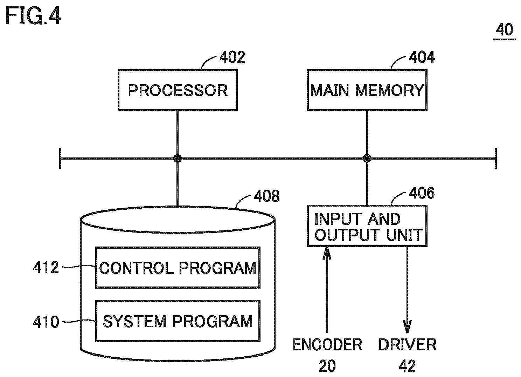

Fig. 4 is a schematic diagram illustrating the hardware configuration example of controller 40 configuring drive system 1 of the embodiment. With reference to Fig. 4, controller 40 is a type of computer, and includes a processor 402, a main memory 404, an input and output unit 406, and a storage 408 as main hardware components.

Processor 402 is typically configured of a central processing unit (CPU), a micro-processing unit (MPU), or the like, reads a system program 410 and a control program 412 stored in storage 408, expands the system program and the control program in the main memory 404, and executes the system program and the control program to implement control calculation controlling the behavior of actuator 2 as described later.

Input and output unit 406 is in charge of transmission and reception of a signal between controller 40 and an external device. In the example of Fig. 4, input and output unit 406 receives a detection signal from encoder 20 and transmits a control instruction to driver 42.

Storage 408 is typically configured of a solid state disk (SSD) or a fresh memory, and stores system program 410 implementing basic processing and control program 412.

Although the configuration example in which required processing is provided by processor 402 executing the program has been described in Fig. 4, a part or all of provided processing may be implemented using a dedicated hardware circuit (for example, an application specific integrated circuit (ASIC) and a field-programmable gate array (FPGA)).

<C. Impact absorbing operation>

An impact absorbing operation of actuator 2 of the embodiment will be described below. In the impact absorbing operation, actuator 2 operates passively according to the applied load.

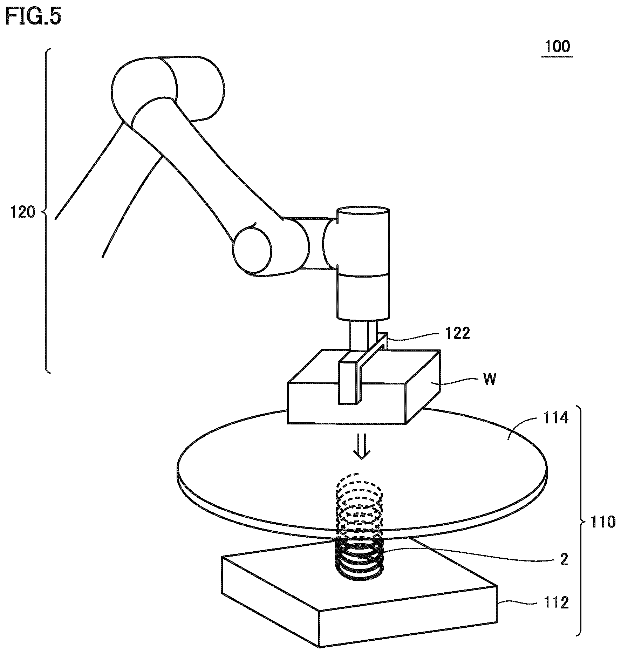

Fig. 5 is a schematic diagram illustrating a workpiece conveyance system 100 in which actuator 2 of the embodiment performs the impact absorbing operation. With reference to Fig. 5, the case where a workpiece W adsorbed by an end effector 122 provided at the distal end of a robot 120 is disposed on a stage mechanism 110 will be described as an example. Stage mechanism 110 includes a base portion 112 and a plate 114. Base portion 112 and plate 114 are mechanically connected with actuator 2 of the embodiment interposed therebetween. In Fig. 5, actuator 2 is illustrated as a spring for easy understanding.

In workpiece conveyance system 100 as illustrated in Fig. 5, when stage mechanism 110 that receives workpiece W does not move when workpiece W is disposed, workpiece W collides with plate 114 and stops. That is, because movement speed of workpiece W greatly changes before and after the collision, a large load (impact force) is applied to workpiece W from stage mechanism 110 by a change in acceleration accompanying the change in the movement speed.

Even when stage mechanism 110 moves along workpiece W, when a contact area between workpiece W and plate 114 is small, the large load is applied to a contact member of workpiece W. Such a phenomenon is also referred to as point load or load concentration.

As illustrated in Fig. 5, in order to absorb an excessive load (impact force) generated when objects come into contact with each other or prevent the generation of the point load, actuator 2 of the embodiment performs the impact absorbing operation.

In the impact absorbing operation, the spring contracts or expands to the position (that is, the balance position) corresponding to the behavior of the spring when an external force is received, namely, the displacement at which restoring force corresponding to the external force is generated. Such the contraction or expansion behavior follows the physical model that is the substantially ideal physical behavior.

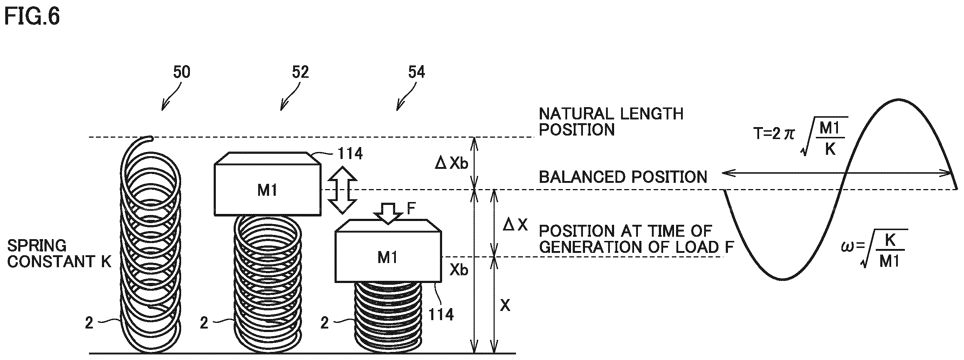

Fig. 6 is a view illustrating the behavior from a physical viewpoint related to the impact absorbing operation of actuator 2 of the embodiment. With reference to Fig. 6, when plate 114 is attached in the state (natural length state 50) where no load is applied to actuator 2 acting as the spring, mass M1 of plate 114 is applied to actuator 2. Actuator 2 receives the load of mass M1 of plate 114 and is brought into an equilibrium state at the position (balanced position) shortened by a predetermined length ΔXb (balanced state 52). At this point, it is assumed that a length of actuator 2 is Xb.

In the embodiment, the behavior as the spring is calculated based on the balanced position. For example, when a load F is applied to actuator 2, an equilibrium state is established at the position (the position at the time of the generation of load F) shortened by predetermined length ΔX from the balanced position (load equilibrium state 54). At this point, it is assumed that the length of actuator 2 is X.

The behavior as the spring is determined according to collapse from balanced state 52. At this point, for convenience of description, a single vibration model is assumed as the simplest physical model. Considering the behavior as the spring with the balanced position as a reference, when the spring constant of actuator 2 is set to K (which can be arbitrarily set in advance), period T of the single vibration of the spring = 2π√(M1/K). In addition, the angular frequency ω = 2π/T = √(K/M1).

That is, when any load F is applied to actuator 2, actuator 2 starts the single vibration with an amplitude A1 corresponding to the magnitude of applied load F. Each value related to the single vibration by actuator 2 is as follows.

$$\text{Displacement } \Delta X = A1 \times \sin(\omega t)$$

$$\text{Speed } V = A1 \times \omega \times \cos(\omega t)$$

$$\text{Acceleration } a = A1 \times \omega^2 \times \sin(\omega t) = -\omega^2 \Delta X$$

As will be described later, the physical model or the like is determined based on displacement ΔX with respect to the state (balance state 52) in which the object is attached to actuator 2.

In drive system 1 of the embodiment, the behavior of the spring is reproduced by actuator 2 using the physical model indicating the behavior of the spring. The physical model may be the single vibration model as described above, a model including an element of the mass indicating mass M1 of plate 114, or a model including an element of damping. These physical models may be determined according to an equation of motion (such as F = K × X + M × V) for the spring.

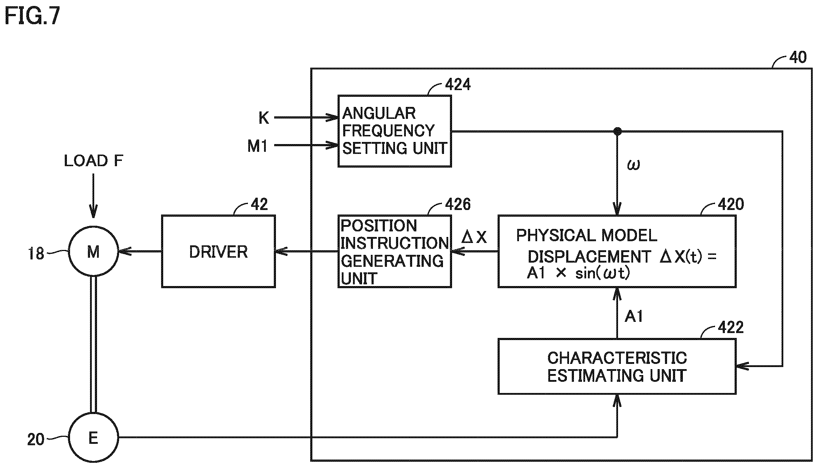

Fig. 7 is a schematic diagram illustrating a main functional configuration implementing the impact absorbing operation by actuator 2 of the embodiment. With reference to Fig. 7, controller 40 includes a physical model 420, a characteristic estimating unit 422, an angular frequency setting unit 424, and a position instruction generating unit 426.

Physical model 420 is a model implementing the behavior as a spring. Fig. 7 illustrates a single vibration model as an example. In this case, physical model 420 calculates the displacement at an arbitrary time t according to displacement ΔX(t) = A1 × sin(ωt).

Characteristic estimating unit 422 corresponds to the model creation unit creating physical model 420 based on the displacement caused by the application of the external load to actuator 2. More specifically, characteristic estimating unit 422 estimates a parameter (in the example illustrated in Fig. 7, amplitude A1) included in physical model 420 based on the detection signal from encoder 20. The estimated parameter is reflected in physical model 420. The characteristic (parameter) of physical model 420 is determined based on a change caused by the application of arbitrary load F to actuator 2.

For example, when physical model 420 is the single vibration model, amplitude A1 of physical model 420 can be calculated based on a position change (speed) immediately after arbitrary load F is applied to actuator 2.

As described above, characteristic estimating unit 422 estimates the parameter of physical model 420 based on the temporal change in the displacement of actuator 2 (speed, acceleration, jerk, or the like). The estimated parameter is appropriately determined according to physical model 420. For example, a spring constant or a damping constant may be determined. As described above, because the parameter of the physical model is estimated when significant displacement is generated in actuator 2, physical model 420 has the characteristic corresponding to a predetermined load to actuator 2 from the outside.

Angular frequency setting unit 424 sets angular frequency ω of physical model 420 based on mass M1 of the object (in the example of Figs. 5 and 6, plate 114) attached to actuator 2 and previously-set spring constant K. More specifically, angular frequency setting unit 424 sets angular frequency ω based on spring constant K set in advance and known mass M1. As described above, angular frequency ω is calculated as $\omega = 2\pi/T = \sqrt{(K/M1)}$.

Position instruction generating unit 426 generates the control instruction such that actuator 2 is displaced in accordance with physical model 420. More specifically, position instruction generating unit 426 generates the control instruction (position instruction or displacement instruction) in each control period based on displacement ΔX calculated according to physical model 420, and outputs the control instruction to driver 42. That is, position instruction generating unit 426 may output the position instruction that designates the target position of motor 18 as the control instruction.

The parameters defining physical model 420 is estimated by the above processing procedure. Then, the behavior of actuator 2 is determined according to physical model 420 including the estimated parameter.

The single vibration of actuator 2 causes actuator 2 to generate a load $F_a = K \times X + M1 \times V$ against load F by workpiece W. That is, load $F_a$ reflects moment generated by the movement of plate 114 (mass M1).

As described above, in the impact absorbing operation of the embodiment, a physical spring (operation as a damper) is implemented by the control of motor 18. The control is performed based on the balanced position, so that the behavior according to the physical formula can be implemented even when the applied load is small. Because the behavior follows the physical formula, preliminary calculation, simulation, and the like in designing the control system are facilitated, and a deviation from the preliminary design is reduced even in the case where the actual device is configured.

In general, in a mechanism including a plurality of components, resistance between the components exists, and magnitude of the existing resistance changes depending on the surrounding environment, use history, and the like, so that it is difficult to perform pre-calculation and the like. On the other hand, in the impact absorbing operation of the embodiment, the behavior according to the physical formula can be implemented without depending on the magnitude of the resistance between the components. Furthermore, actuator 2 of the embodiment is driven by motor 18, so that the spring can be implemented with improved responsiveness and flexibility.

<D. Elastic force generating operation>

An elastic force generating operation of actuator 2 of the embodiment will be described below. In the elastic force generating operation, the load calculated according to Hooke's law ($F_a$ = spring constant K × displacement ΔX) is generated. In the embodiment, when spring constant K is varied, the target load (elastic force) can be applied to workpiece W or the like.

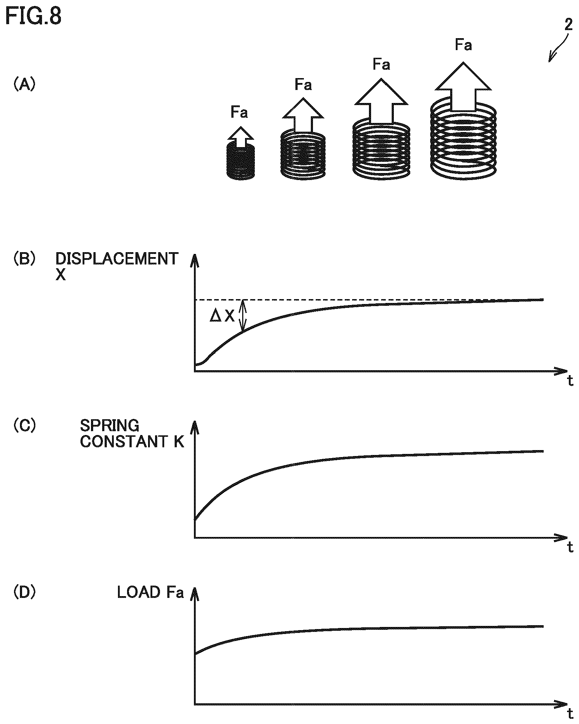

Fig. 8 is a view illustrating the elastic force generating operation of actuator 2 of the embodiment. With reference to Fig. 8(A), it is assumed that the case where actuator 2 generates the displacement according to the physical model. As an example, in the case where actuator 2 changes from the contracted state to the extended state, a temporal change in displacement of Fig. 8(B) is illustrated.

When spring constant K is constant, load $F_a$ proportional to displacement ΔX (the change from the natural length) is generated, but the magnitude of generated load $F_a$ can be adjusted by temporally changing spring constant K.

For example, as illustrated in Fig. 8(C), the magnitude of load $F_a$ changes as illustrated in Fig. 8(D) by temporally changing spring constant K. In the example of Fig. 8(D), the fluctuation of generated load $F_a$ is prevented by increasing spring constant K along the lapse of time.

In addition, in the case where the required load $F_a$ is previously set, spring constant K corresponding to displacement ΔX may be calculated in each control period.

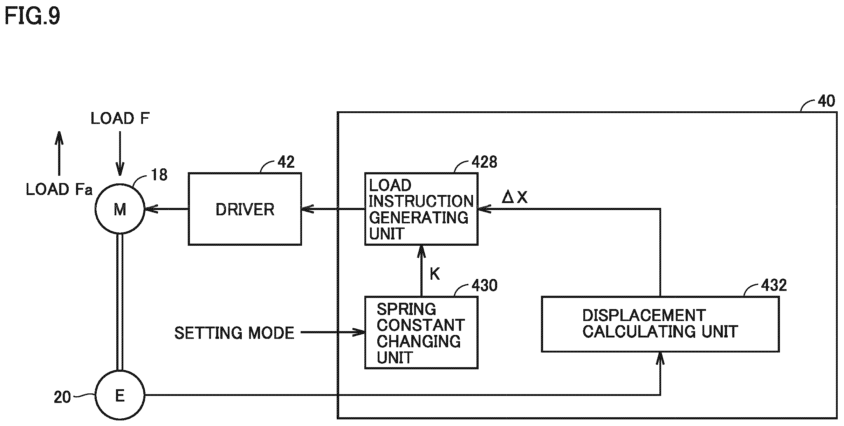

Fig. 9 is a schematic diagram illustrating the main functional configuration implementing the elastic force generating operation by actuator 2 of the embodiment. With reference to Fig. 9, controller 40 includes a load instruction generating unit 428, a spring constant changing unit 430, and a displacement calculating unit 432.

Spring constant changing unit 430 corresponds to the determination unit that determines spring constant K. Spring constant changing unit 430 may set spring constant K for each arbitrary section, or may set spring constant K for each control period. As an example, spring constant changing unit 430 sets spring constant K (t) in each control period according to a predetermined pattern.

Spring constant changing unit 430 may have a pattern outputting spring constant K (t) as illustrated in Fig. 8(C). When a plurality of types of workpieces W exist, a plurality of patterns of the spring constant may be stored in spring constant changing unit 430. In that case, one of the plurality of patterns may be selected according to a setting mode.

Displacement calculating unit 432 calculates displacement ΔX generated in actuator 2 based on the detection signal from encoder 20. Displacement $\Delta X$ calculated by displacement calculating unit 432 is calculated based on the state where the object (in the example of Figs. 5 and 6, plate 114) is attached to actuator 2.

Load instruction generating unit 428 generates the control instruction so as to generate the drive force calculated based on a product of spring constant K and displacement $\Delta X$ generated in actuator 2. More specifically, load instruction generating unit 428 calculates load $F_a$ (= K(t) $\times$ $\Delta X$) to be generated in each control period based on displacement $\Delta X$ calculated by displacement calculating unit 432 and spring constant K (t) from spring constant changing unit 430, generates the control instruction (typically, a torque instruction) so as to generate calculated load $F_a$, and outputs the control instruction to driver 42. That is, load instruction generating unit 428 may output the torque instruction that designates torque to be generated by motor 18 as the control instruction.

By the above processing procedure, load $F_a$ corresponding to displacement $\Delta X$ and spring constant K can be generated from actuator 2. Actually, because the moment generated by the movement of plate 114 (mass M1) is reflected, actuator 2 generates load $F_a$ = K $\times$ X + M1 $\times$ V.

When the physical model including the element of the damping is adopted, the damping constant may be temporally changed in addition to or instead of spring constant K.

As described above, in the elastic force generating operation of the embodiment, the physical spring (operation as the damper) is implemented by the control of motor 18. Because the behavior follows the physical formula, preliminary calculation, simulation, and the like in designing the control system are facilitated, and a deviation from the preliminary design is reduced even in the case where the actual device is configured.

In addition, in the elastic force generating operation of the embodiment, because the load is generated in proportion to the displacement generated in the actuator, a sensor or the like that measures the external force (load from the outside) becomes unnecessary. Accordingly, even in a manufacturing device having high rigidity or a manufacturing device having a non-negligible internal resistance, the generated load can be precisely controlled.

In addition, the spring constant can be changed in the elastic force generating operation of the embodiment, so that the target load according to the application can be generated while following the physical formula of generating the load in proportion to the displacement generated in the actuator.

<E. Impact absorbing operation and elastic force generating operation>

The generation of the large load (impact force) can be prevented when workpiece W comes into contact with workpiece W or the like by switching between the impact absorbing operation and the elastic force generating operation.

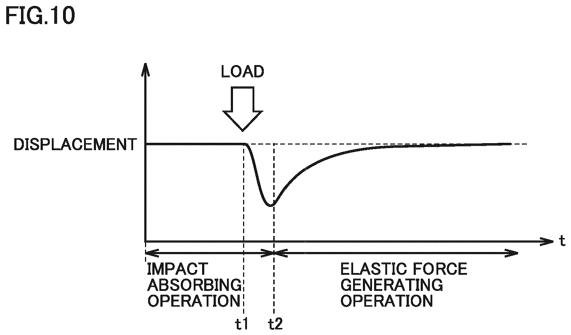

Fig. 10 is a view illustrating processing for preventing the generation of the impact force due to contact between objects using actuator 2 of the embodiment. With reference to Fig. 10, when the impact absorbing operation is previously executed to apply some load, actuator 2 operates passively according to the applied load. Thereafter, the operation is switched to the elastic force generating operation under a predetermined switching condition, and the load calculated based on the spring constant defined by the generated displacement and pattern is generated.

In the impact absorbing operation, actuator 2 is not displaced at all unless the external force (external load) is applied. When the external force is applied, the parameter corresponding to the applied external force is calculated, and the displacement of actuator 2 is controlled by the physical model having the calculated parameter.

The switching condition switching between the impact absorbing operation and the elastic force generating operation may be based on the elapsed time after the load is applied to actuator 2 from the outside, the displacement (current position) generated in actuator 2, a trigger from the external device, or the like.

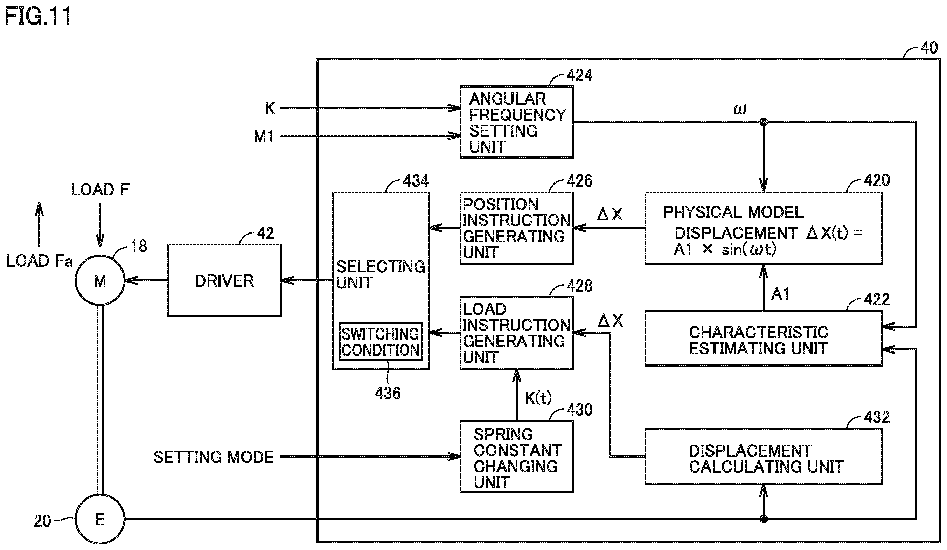

Fig. 11 is a schematic diagram illustrating the main functional configuration implementing the impact absorbing operation and the elastic force generating operation by actuator 2 of the embodiment. With reference to Fig. 11, controller 40 includes physical model 420, characteristic estimating unit 422, angular frequency setting unit 424, position instruction generating unit 426, load instruction generating unit 428, spring constant changing unit 430, displacement calculating unit 432, and a selecting unit 434.

The functional configuration in Fig. 11 corresponds to addition of selecting unit 434 after a combination of the functional configuration implementing the impact absorbing operation in Fig. 7 and the functional configuration implementing the elastic force generating operation in Fig. 9. That is, selecting unit 434 selects one of the control instruction implementing the impact absorbing operation output from position instruction generating unit 426 and the control instruction implementing the elastic force generating operation output from load instruction generating unit 428 to be validated.

Selecting unit 434 has a switching condition 436, and selects and outputs one of the control instruction output from position instruction generating unit 426 and the control instruction output from load instruction generating unit 428 based on whether switching condition 436 is satisfied. Typically, selecting unit 434 validates the control instruction from load instruction generating unit 428 when switching condition 436 is satisfied while the control instruction from position instruction generating unit 426 is validated.

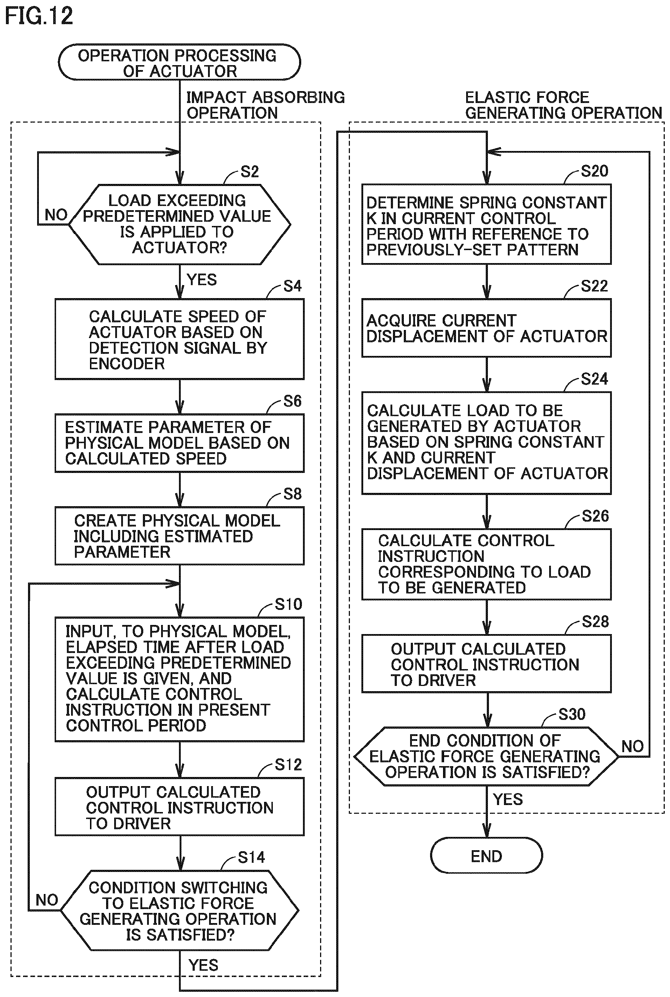

Fig. 12 is a flowchart illustrating an example of a processing procedure related to the impact absorbing operation and the elastic force generating operation by actuator 2 of the embodiment. Typically, processor 402 of controller 40 executes control program 412 to implement each step in Fig. 12. When processor 402 executes control program 412, a library or the like provided by system program 410 may be used as a part of the processing.

In the processing of Fig. 12, steps S2 to S14 correspond to processing related to the impact absorbing operation, and steps S20 to S28 correspond to processing related to the elastic force generating operation.

That is, controller 40 first performs the processing related to the impact absorbing operation. More specifically, controller 40 determines whether the load exceeding a predetermined value is applied to actuator 2 based on the detection signal from encoder 20 (step S2). When the load exceeding the predetermined value is not applied to actuator 2 (NO in step S2), the pieces of processing from step S2 are repeated.

When the load exceeding the predetermined value is applied to actuator 2 (YES in step S2), controller 40 calculates the speed of actuator 2 based on the detection signal by encoder 20 (step S4), and estimates the parameter of the physical model based on the calculated speed (step S6). Then, controller 40 creates the physical model including the estimated parameter (step S8). In this manner, controller 40 creates the physical model based on the displacement caused by the application of the load from the outside to actuator 2.

Controller 40 inputs the elapsed time after the load exceeding the predetermined value is applied to actuator 2 to the physical model, calculates the control instruction (the position instruction or the displacement instruction) in the current control period (step S10), and outputs the calculated control instruction to driver 42 (step S12). That is, controller 40 controls motor 18 such that actuator 2 generates the displacement according to the physical model.

Then, controller 40 determines whether the condition switching to the elastic force generating operation (switching condition 436) is satisfied (step S14). When the condition switching to the elastic force generating operation is not satisfied (NO in step S14), the pieces of processing from step S10 are repeated.

When the condition switching to the elastic force generating operation is satisfied (YES in step S14), controller 40 performs the processing related to the following elastic force generating operation. More specifically, controller 40 determines spring constant K in the current control period with reference to the previously-set pattern (step S20). In this manner, controller 40 determines spring constant K.

Subsequently, controller 40 acquires the current displacement of actuator 2 (step S22), and calculates the load to be generated by actuator 2 based on spring constant K and the current displacement of actuator 2 (step S24). Then, controller 40 calculates the control instruction (the position instruction or the displacement instruction) corresponding to the load to be generated (step S26), and outputs the calculated control instruction to driver 42 (step S28). In this manner, controller 40 controls motor 18 so as to generate drive force calculated based on the product of spring constant K and displacement ΔX generated in actuator 2.

As described above, when the predetermined switching condition is satisfied while actuator 2 is performing the impact absorbing operation (when the motor is controlled so as to generate the displacement according to physical model), controller 40 switches the control of motor 18 so as to generate the drive force calculated based on the product of spring constant K and displacement ΔX generated in actuator 2.

Then, controller 40 determines whether an end condition of the elastic force generating operation is satisfied (step S30). When the end condition of the elastic force generating operation is not satisfied (NO in step S30), the pieces of processing from step S20 are repeated.

When the end condition of the elastic force generating operation is satisfied (YES in step S30), the processing ends.

Although Fig. 12 illustrates the processing example in which the impact absorbing operation and the elastic force generating operation by actuator 2 of the embodiment are combined, only the impact absorbing operation and only the elastic force generating operation may be performed. An appropriate operation is selected according to the application using actuator 2.

<F. Example of drive mechanism>

For convenience of description, the configuration including single actuator 2 has been exemplified, but a mechanism including the plurality of actuators 2 may be implemented. An example of the drive mechanism including actuator 2 will be described below.

(f1: Stage mechanism with one degree of freedom)

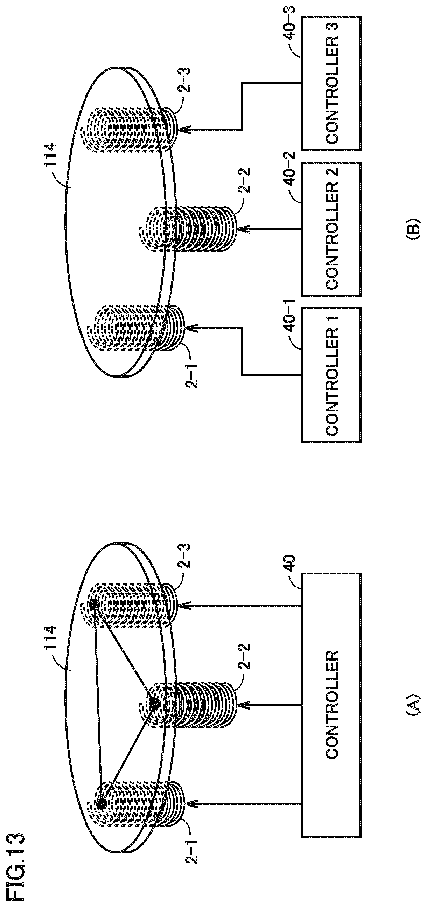

Fig. 13 is a schematic view illustrating an example of a stage mechanism with one degree of freedom including the plurality of actuators 2 of the embodiment. Figs. 13(A) and 13(B) illustrate a configuration example of the stage mechanism in which plate 114 is supported by three actuators 2-1, 2-2, 2-3. In the stage mechanism of Figs. 13(A) and 13(B), the plurality of actuators 2 are mechanically connected to plate 114 that is a common member.

In the stage mechanism of Fig. 13(A), controller 40 synchronously controls actuators 2-1, 2-2, 2-3, so that the entire surface of plate 114 can be controlled. At this point, controller 40 generates the control instructions for the actuators 2-1, 2-2, 2-3 such that the target load is generated from plate 114 that is the common member.

In the stage mechanism of Fig. 13(B), controllers 40-1, 40-2, 40-3 control actuators 2-1, 2-2, 2-3, respectively. Each of actuators 2-1, 2-2, 2-3 is independently controlled, so that the behavior corresponding to a local load can be performed even when the local load is applied to plate 114.

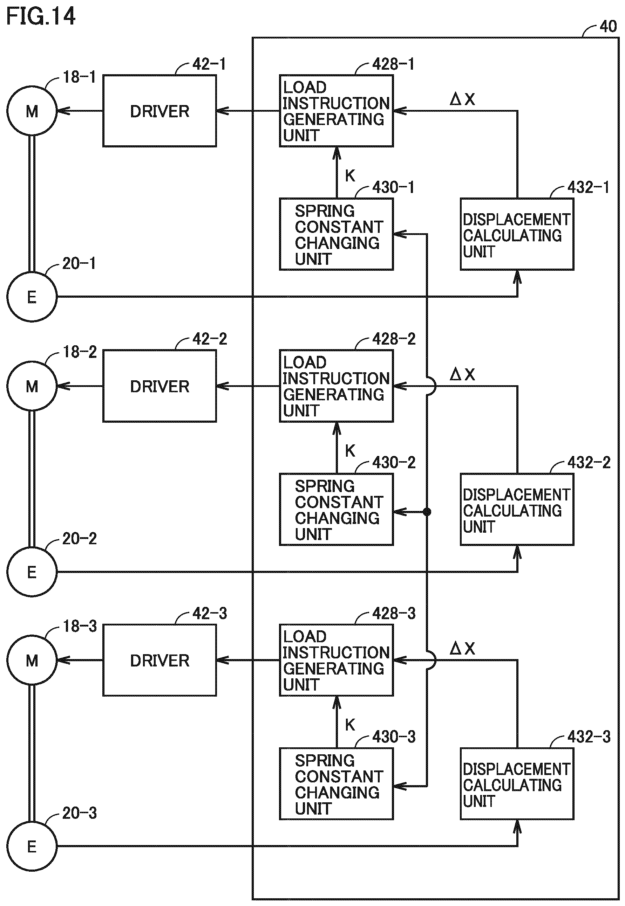

Fig. 14 is a schematic diagram illustrating the main functional configuration implementing the elastic force generating operation by the stage mechanism in Fig. 13(A). With reference to Fig. 14, actuators 2-1, 2-2, 2-3 are driven by drivers 42-1, 42-2, 42-3, and the displacement is detected by encoders 20-1, 20-2, 20-3.

Controller 40 includes load instruction generating units 428-1, 428-2, 428-3, spring constant changing units 430-1, 430-2, 430-3, and displacement calculating units 432-1, 432-2, 432-3 in order to control actuators 2-1, 2-2, 2-3.

In order to control the load generated by the entire surface of plate 114, the timing at which each spring constant is changed or updated is controlled among spring constant changing units 430-1, 430-2, 430-3. The spring constants may be gradually changed in synchronization, or the spring constants may be arbitrated so as to correct the variation in the displacement.

The load generated by plate 114 can be controlled on the entire surface by adopting such the control logic.

In the impact absorbing operation, the physical models corresponding to the actuators are synchronized with each other, so that the load generated in plate 114 can be controlled on the entire surface.

(f2: Stage mechanism with multiple degrees of freedom)

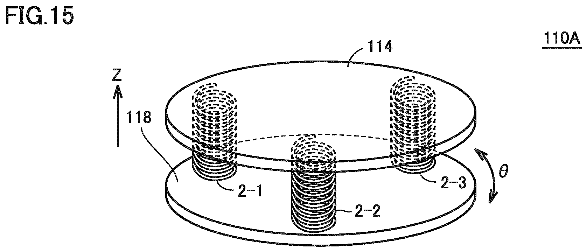

Fig. 15 is a schematic view illustrating an example of a multi-degree-of-freedom stage mechanism 110A including the plurality of actuators 2 of the embodiment.

With reference to Fig. 15, stage mechanism 110A is a Zθ-stage having two degrees of freedom. More specifically, stage mechanism 110A includes a rotating member 118 configured to rotate in a θ-axis direction and three actuators 2-1, 2-2, 2-3 extending in a Z-axis direction.

The use of stage mechanism 110A in Fig. 15 enables the use in various applications.

(f3: Others)

As described above, actuator 2 of the embodiment can be used alone or as the stage incorporating actuator 2. Furthermore, actuator 2 can also be used as a manufacturing device including the stage.

<G. Application examples>

An example of the application using actuator 2 of the embodiment will be described.

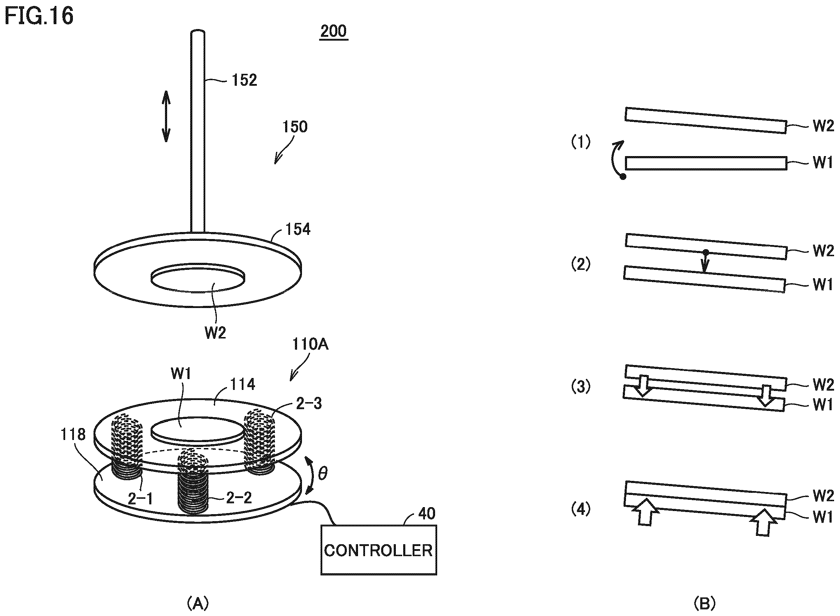

Fig. 16 is a schematic diagram illustrating an example of the application using actuator 2 of the embodiment. Fig. 16 illustrates the application superimposing the workpieces in order to paste a workpiece W1 and a workpiece W2.

With reference to Fig. 16(A), an assembly device 200 in which two workpieces are overlapped includes stage mechanism 110A, a conveyance mechanism 150, and controller 40. Workpiece W1 is disposed on plate 114 of stage mechanism 110A. Workpiece W2 superimposed on workpiece W1 is conveyed by conveyance mechanism 150 from above stage mechanism 110A. Controller 40 gives the control instruction to stage mechanism 110A to control stage mechanism 110A.

Stage mechanism 110A includes one or the plurality of actuators 2 that are driven by motor 18 to generate the displacement in a first direction (Z-axis direction). Because the configuration of stage mechanism 110A has been described with reference to Fig. 15, the detailed description will not be repeated.

Conveyance mechanism 150 includes a support column 152 and a plate 154. Plate 154 is connected to support column 152 and is movable in the vertical direction of gravity by a drive mechanism (not illustrated).

Adsorption holes are made on the surface of plate 154. Workpiece W2 is conveyed in the state of being adsorbed to the surface of plate 154 by an adsorption mechanism (not illustrated).

With reference to Fig. 16(B), the processing procedure in assembly device 200 will be described below.

First, the displacement of actuators 2-1, 2-2, 2-3 of stage mechanism 110A is adjusted such that workpiece W1 and workpiece W2 are parallel to each other ((1) a parallel maintaining operation). That is, controller 40 gives the control instruction to stage mechanism 110A such that workpiece W1 and workpiece W2 are parallel to each other according to workpiece W2 superimposed on workpiece W1.

The parallel maintaining operation may be implemented by feedback control based on a detection signal by a sensor (not illustrated) provided in conveyance mechanism 150. In the parallel maintaining operation, a predetermined distance margin is provided between the workpieces such that workpiece W1 and workpiece W2 do not collide with each other by orientation adjustment.

After workpiece W1 and workpiece W2 are adjusted to be parallel by the parallel maintaining operation, the control is performed to reduce the distance between workpiece W1 and workpiece W2, namely, to superimpose workpiece W2 on workpiece W1 ((2) a workpiece approaching operation). In the workpiece approaching operation, conveyance mechanism 150 brings workpiece W2 close to workpiece W1 and adjusts the displacement of actuators 2-1, 2-2, 2-3 of stage mechanism 110A to maintain workpiece W1 and workpiece W2 in parallel.

Immediately before workpiece W1 and workpiece W2 come into contact with each other, the impact absorbing operation is started ((3) the impact absorbing operation). That is, controller 40 creates the physical model based on the displacement in actuator 2 caused by workpiece W2 contacting workpiece W1. Then, controller 40 generates the control instruction that causes actuator 2 to be displaced according to the physical model. As described above, when workpiece W2 comes into contact with workpiece W1 to apply the load to actuator 2, actuator 2 operates like the spring according to the physical model as described above. The excessive load and the point load caused by the contact between workpiece W1 and workpiece W2 can be avoided by the impact absorbing operation.

Thereafter, when the predetermined switching condition is satisfied, the elastic force generating operation is started ((4) the elastic force generating operation). That is, the control instruction that generates the drive force calculated based on the product of spring constant K and displacement $\Delta X$ generated in actuator 2 is generated. Pressing force is generated between workpiece W1 and workpiece W2 by the elastic force generating operation, and the pasting of workpiece W1 and workpiece W2 is completed.

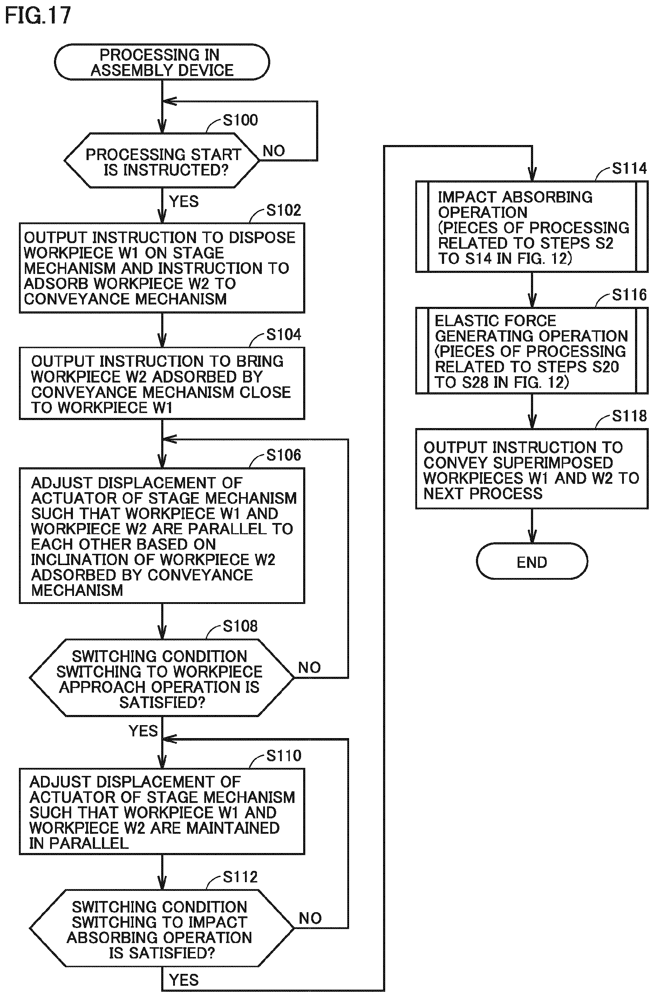

Fig. 17 is a flowchart illustrating the processing procedure in assembly device 200 in Fig. 16. Typically, processor 402 of controller 40 executes control program 412 to implement each step in Fig. 17. When processor 402 executes control program 412, a library or the like provided by system program 410 may be used as a part of the processing.

With reference to Fig. 17, when the processing start is instructed (YES in step S100), controller 40 outputs the instruction to dispose workpiece W1 on stage mechanism 110A and the instruction to adsorb workpiece W2 to conveyance mechanism 150 (step S102). Then, controller 40 outputs the instruction to bring workpiece W2 adsorbed by conveyance mechanism 150 close to workpiece W1 (step S104), and starts the parallel maintaining operation.

More specifically, controller 40 adjusts the displacement of actuators 2-1, 2-2, 2-3 of stage mechanism 110A such that workpiece W1 and workpiece W2 are parallel to each other based on inclination of workpiece W2 adsorbed by conveyance mechanism 150 (step S106). In this manner, controller 40 gives the control instruction to stage mechanism 110A such that workpiece W1 and workpiece W2 are parallel to each other according to workpiece W2 superimposed on workpiece W1.

Then, controller 40 determines whether the switching condition switching to the workpiece approach operation is satisfied based on a parallelism degree between workpiece W1 and workpiece W2 (step S108). When the switching condition is not satisfied (NO in step S108), the pieces of processing from step S106 are repeated.

When the switching condition is satisfied (YES in step S108), controller 40 adjusts the displacement of actuators 2-1, 2-2, 2-3 of stage mechanism 110A such that workpiece W1 and workpiece W2 are maintained in parallel (step S110). Then, controller 40 determines whether the switching condition switching to the impact absorbing operation is satisfied based on the distance between workpiece W1 and workpiece W2 (step S112). When the switching condition is not satisfied (NO in step S112), the pieces of processing from step S110 are repeated.

When the switching condition is satisfied (YES in step S112), controller 40 starts the impact absorbing operation (step S114). In the impact absorbing operation, the pieces of processing according to steps S2 to S14 in Fig. 12 are performed.

When the switching condition from the impact absorbing operation to the elastic force generating operation is satisfied, controller 40 starts the elastic force generating operation (step S116). In the elastic force generating operation, the pieces of processing according to steps S20 to S28 in Fig. 12 are performed.

When the superimposition of workpiece W1 and workpiece W2 is completed, controller 40 outputs the instruction to convey superimposed workpieces W1 and W2 to the next process (step S118). Thus, one processing is completed.

As described above, by the series of control including the impact absorbing operation and the elastic force generating operation of the embodiment, the workpieces can be pressed with the surface pressure between the workpieces uniformed while the impact generated between the workpieces to reduce the damage generated on the workpieces. Thus, the generation of a defective product can be reduced and the workpiece of higher quality can be manufactured.

<H. Other embodiments>

As described above, the control (impact absorbing operation and/or elastic force generating operation) of actuator 2 of the embodiment can be applied to any application including contact between the objects, such as conveyance, superimposition, bonding, and insertion.

In addition, the impact absorbing operation of actuator 2 of the embodiment can also be applied to a spring mechanism such as vibration removal and vibration suppression, a tensioner, and the like alone.

In addition, the elastic force generating operation of actuator 2 of the embodiment can be applied to a mechanism that generates an arbitrary load such as a press device alone.

<I. Advantages>

According to the embodiment, the actuator behaves according to the physical formula, so that the simulation for the creation of the control logic and the facility design can be easily performed. In addition, even in the case where the actual device is configured, the deviation from the previous design is reduced.

Impedance control and admittance control exist as an example of a technique of controlling the load and the position.

The impedance control is a technique of adjusting characteristic (softness) of the actuator so as to remain at the target position when the load is applied to the actuator in the state where the target position and the impedance are previously set. For this reason, the control absorbing the impact force as in the impact absorbing operation of the embodiment is not implemented, but rather, sometimes the larger impact force is generated. In addition, in the impedance control, because the target position is given, the generated load cannot be controlled unlike the elastic force generating operation of the embodiment.

In the admittance control, when the load is applied to the actuator while the impedance is previously set, the operation speed (position in each control period) is controlled based on the impedance. Consequently, only the behavior based on the previously-set impedance can be performed, so that the behavior cannot be changed according to the impact force unlike the impact absorbing operation of the embodiment. In addition, because the admittance control determines the behavior when the load is applied to the actuator, the generated load cannot be controlled unlike the elastic force generating operation of the embodiment.

As described above, the impact absorbing operation and the elastic force generating operation of the embodiment are completely different from the impedance control and the admittance control.

It should be considered that the disclosed embodiment is an example in all respects. The scope of the present invention is defined by the claims rather than the above description, and the present invention is intended to include the claims, and all modifications within the scope.

REFERENCE SIGNS LIST

1: drive system, 2: actuator, 4: drive device, 10: main body, 12: rod, 14: distal end portion, 16: coupling member, 18: motor, 20: encoder, 40: controller, 42: driver, 50: natural length state, 52: balanced state, 54: load equilibrium state, 100: workpiece conveyance system, 110, 110A: stage mechanism, 112: base portion, 114, 154: plate, 118: rotating member, 120: robot, 122: end effector, 150: conveyance mechanism, 152: support column, 200: assembly device, 402: processor, 404: main memory, 406: input and output unit, 408: storage, 410: system program, 412: control program, 420: physical model, 422: characteristic estimating unit, 424: angular frequency setting unit, 426: position instruction generating unit, 428: load instruction generating unit, 430: spring constant changing unit, 432: displacement calculating unit, 434: selecting unit, 436: switching condition, W, W1, W2: workpiece

## Claims

1. A drive system comprising:

   an actuator (2) that is driven by a motor (18) to generate displacement;
   a driver (42) configured to drive the motor; and
   a controller (40) configured to give a control instruction to the driver,
   wherein the controller comprises:

   a determination unit (430) configured to determine a spring constant; and
   an instruction generating unit (428) configured to generate the control instruction so as to generate drive force equal to a product of the spring constant and the displacement generated in the actuator.

2. The drive system according to claim 1, wherein the determination unit (430) is configured to set the spring constant for each control period.

3. The drive system according to claim 2, wherein the determination unit (430) is configured to set the spring constant for each control period according to a predetermined pattern.

4. The drive system according to any one of claims 1 to 3, further comprising an encoder (20), mechanically connected to the motor (18), and configured to detect the displacement in the actuator (2).

5. The drive system according to any one of claims 1 to 4, wherein the controller further comprises a calculation unit (432) configured to calculate the displacement generated in the actuator (2).

6. The drive system according to claim 5, wherein the calculation unit (432) is configured to calculate the displacement based on a state in which an object (114) is attached to the actuator (2).

7. The drive system according to any one of claims 1 to 6, wherein the instruction generating unit (428) is configured to output a torque instruction that designates torque to be generated by the motor (18) as the control instruction.

8. The drive system according to any one of claims 1 to 7, further comprising a plurality of the actuators mechanically connected to a common member, wherein the controller (40) is configured to generate the control instruction for each of the plurality of actuators such that a target load is generated from the common member.

9.  A control method for an actuator (2) that is driven by a motor (18) to generate displacement, the control method comprising:

    determining (S20) a spring constant; and controlling (S22, S24, S26, S28) the motor (18) so as to generate drive force equal to a product of the spring constant and the displacement generated in the actuator (2).

10. The control method according to claim 9, wherein the determining comprises setting the spring constant for each control period.

11. The control method according to claim 10, wherein the determining comprises setting the spring constant for each control period according to a predetermined pattern.

12. The control method according to any one of claims 9 to 11, further comprising detecting the displacement in the actuator (2) with an encoder (20) mechanically connected to the motor (18).

13. A control program (412) for controlling an actuator (2) that is driven by a motor (18) to generate displacement, the control program comprising instructions which, when the program is executed by a computer, cause the computer to carry out the steps of the method of claim 9.

14. The control program (412) according to claim 13, wherein the determining comprises setting the spring constant for each control period.

15. The control program (412) according to claim 14, wherein the determining comprises setting the spring constant for each control period according to a predetermined pattern.

**Patentansprüche**

1.  Antriebssystem, umfassend:

    einen Aktuator (2), der von einem Motor (18) angetrieben wird, um eine Verschiebung zu erzeugen;
    eine Antriebseinheit (42), die dazu ausgelegt ist, den Motor anzutreiben; und
    eine Steuerung (40), die konfiguriert ist, um der Antriebseinheit einen Steuerbefehl zu geben, wobei die Steuerung Folgendes umfasst:

    eine Bestimmungseinheit (430), die konfiguriert ist, um eine Federkonstante zu bestimmen; und
eine Befehlserzeugungseinheit (428), die konfiguriert ist, um den Steuerbefehl zu erzeugen, um eine Antriebskraft zu erzeugen, die gleich einem Produkt der Federkonstante und der in dem Aktuator erzeugten Verschiebung ist.

2.  Antriebssystem nach Anspruch 1, wobei die Bestimmungseinheit (430) konfiguriert ist, um die Federkonstante für jede Steuerperiode einzustellen.

3.  Antriebssystem nach Anspruch 2, wobei die Bestimmungseinheit (430) konfiguriert ist, um die Federkonstante gemäß einem vorbestimmten Muster für jede Steuerperiode einzustellen.

4.  Antriebssystem nach einem der Ansprüche 1 bis 3, ferner umfassend einen Kodierer (20), der mechanisch mit dem Motor (18) verbunden und konfiguriert ist, um die Verschiebung im Aktuator (2) zu detektieren.

5.  Antriebssystem nach einem der Ansprüche 1 bis 4, wobei die Steuerung ferner eine Berechnungseinheit (432) umfasst, die konfiguriert ist, um die im Aktuator (2) erzeugte Verschiebung zu berechnen.

6.  Antriebssystem nach Anspruch 5, wobei die Berechnungseinheit (432) konfiguriert ist, um die Verschiebung beruhend auf einem Zustand zu berechnen, in dem ein Gegenstand (114) an dem Aktuator (2) befestigt ist.

7.  Antriebssystem nach einem der Ansprüche 1 bis 6, wobei die Befehlserzeugungseinheit (428) konfiguriert ist, um einen Drehmomentbefehl auszugeben, der ein durch den Motor (18) zu erzeugendes Drehmoment als Steuerbefehl festlegt.

8.  Antriebssystem nach einem der Ansprüche 1 bis 7, ferner umfassend eine Vielzahl von Aktuatoren, die mechanisch mit einem gemeinsamen Element verbunden sind, wobei die Steuerung (40) konfiguriert ist, um den Steuerbefehl für jeden aus der Vielzahl von Akuatoren zu erzeugen, sodass eine Solllast aus dem gemeinsamen Element erzeugt wird.

9.  Steuerverfahren für einen Aktuator (2), der von einem Motor (18) angetrieben wird, um eine Verschiebung zu erzeugen, wobei das Steuerverfahren Folgendes umfasst:

    Bestimmen (S20) einer Federkonstante; und Steuern (S22, S24, S26, S28) des Motors (18), um eine Antriebskraft zu erzeugen, die gleich einem Produkt der Federkonstante und der in dem Aktuator (2) erzeugten Verschiebung ist.

**10.** Steuerverfahren nach Anspruch 9, wobei das Bestimmen das Einstellen der Federkonstante für jede Steuerperiode umfasst.

**11.** Steuerverfahren nach Anspruch 10, wobei das Bestimmen das Einstellen der Federkonstante für jede Steuerperiode entsprechend einem vorbestimmten Muster umfasst.

**12.** Steuerverfahren nach einem der Ansprüche 9 bis 11, ferner umfassend das Detektieren der Verschiebung in dem Aktuator (2) mit einem Kodierer (20), der mechanisch mit dem Motor (18) verbunden ist.

**13.** Steuerprogramm (412) zum Steuern eines Aktuators (2), der durch einen Motor (18) angetrieben wird, um eine Verschiebung zu erzeugen, wobei das Steuerprogramm Befehle umfasst, die, wenn das Programm von einem Computer ausgeführt wird, bewirken, dass der Computer die Schritte eines Verfahrens nach Anspruch 9 ausführt.

**14.** Steuerprogramm (412) nach Anspruch 13, wobei das Bestimmen das Einstellen der Federkonstante für jede Steuerperiode umfasst.

**15.** Steuerprogramm (412) nach Anspruch 14, wobei das Bestimmen das Einstellen der Federkonstante für jede Steuerperiode entsprechend einem vorbestimmten Muster umfasst.

**Revendications**

**1.** Système d'entraînement, comprenant :

un actionneur (2) qui est entraîné par un moteur (18) pour générer un déplacement ;
un dispositif d'entraînement (42) configuré pour entraîner le moteur ; et
un dispositif de commande (40) configuré pour donner une instruction de commande au dispositif d'entraînement, dans lequel le dispositif de commande comprend :

une unité de détermination (430) configurée pour déterminer une constante d'élasticité ; et
une unité de génération d'instruction (428) configurée pour générer l'instruction de commande de manière à générer une force d'entraînement égale à un produit de la constante d'élasticité et du déplacement généré dans l'actionneur.

**2.** Système d'entraînement selon la revendication 1, dans lequel l'unité de détermination (430) est configurée pour définir la constante d'élasticité pour chaque période de commande.

**3.** Système d'entraînement selon la revendication 2, dans lequel l'unité de détermination (430) est configurée pour définir la constante d'élasticité pour chaque période de commande selon un motif prédéterminé.

**4.** Système d'entraînement selon l'une quelconque des revendications 1 à 3, comprenant en outre un codeur (20), connecté mécaniquement au moteur (18), et configuré pour détecter le déplacement dans l'actionneur (2).

**5.** Système d'entraînement selon l'une quelconque des revendications 1 à 4, dans lequel le dispositif de commande comprend en outre une unité de calcul (432) configurée pour calculer le déplacement généré dans l'actionneur (2).

**6.** Système d'entraînement selon la revendication 5, dans lequel l'unité de calcul (432) est configurée pour calculer le déplacement sur la base d'un état dans lequel un objet (114) est fixé à l'actionneur (2).

**7.** Système d'entraînement selon l'une quelconque des revendications 1 à 6, dans lequel l'unité de génération d'instruction (428) est configurée pour délivrer en sortie une instruction de couple qui désigne un couple devant être généré par le moteur (18) en tant qu'instruction de commande.

**8.** Système d'entraînement selon l'une quelconque des revendications 1 à 7, comprenant en outre une pluralité d'actionneurs connectés mécaniquement à un élément commun,
dans lequel le dispositif de commande (40) est configuré pour générer l'instruction de commande pour chacun de la pluralité d'actionneurs de telle sorte qu'une charge cible soit générée à partir de l'élément commun.

**9.** Procédé de commande d'un actionneur (2) qui est entraîné par un moteur (18) pour générer un déplacement, le procédé de commande comprenant les étapes consistant à :

déterminer (S20) une constante d'élasticité ; et
commander (S22, S24, S26, S28) le moteur (18) de manière à générer une force d'entraînement égale à un produit de la constante d'élasticité et du déplacement généré dans l'actionneur (2).

**10.** Procédé de commande selon la revendication 9, dans lequel la détermination comprend une définition de la constante d'élasticité pour chaque période de commande.

**11.** Procédé de commande selon la revendication 10, dans lequel la détermination comprend une définition de la constante d'élasticité pour chaque période de commande selon un motif prédéterminé.

**12.** Procédé de commande selon l'une quelconque des revendications 9 à 11, comprenant en outre une détection du déplacement dans l'actionneur (2) à l'aide d'un codeur (20) connecté mécaniquement au moteur (18).

**13.** Programme de commande (412) pour commander un actionneur (2) qui est entraîné par un moteur (18) pour générer un déplacement, le programme de commande comprenant des instructions qui, lorsque le programme est exécuté par un ordinateur, amènent l'ordinateur à exécuter les étapes du procédé de la revendication 9.

**14.** Programme de commande (412) selon la revendication 13, dans lequel la détermination comprend une définition de la constante d'élasticité pour chaque période de commande.

**15.** Programme de commande (412) selon la revendication 14, dans lequel la détermination comprend une définition de la constante d'élasticité pour chaque période de commande selon un motif prédéterminé.

FIG.1

FIG.2

# FIG.3

$$F_1 \propto \Delta X_1$$

$$\Delta X_1$$

$$X_1$$

$$X_0$$

(B)

$$X_0$$

(A)

$$F_2 \propto \Delta X_2$$

$$\Delta X_2$$

$$X_2$$

(C)

# FIG.4

<u>40</u>

FIG.5

FIG.6

NATURAL LENGTH POSITION

$T=2\pi\sqrt{\dfrac{M1}{K}}$

BALANCED POSITION

$\Delta Xb$

$\Delta X$   POSITION AT TIME OF GENERATION OF LOAD F

$\omega=\sqrt{\dfrac{K}{M1}}$

SPRING CONSTANT K

Xb

X

50   52   54

M1

M1   F

114

114

2   2   2

EP 4 280 431 B1

FIG.7

EP 4 280 431 B1

# FIG.8

(A)

(B) DISPLACEMENT X

(C) SPRING CONSTANT K

(D) LOAD Fa

FIG.9

LOAD F

LOAD Fa

M 18

DRIVER 42

LOAD INSTRUCTION GENERATING UNIT 428

ΔX

SPRING CONSTANT CHANGING UNIT 430

SETTING MODE

K

DISPLACEMENT CALCULATING UNIT 432

E 20

40

EP 4 280 431 B1

FIG.10

FIG.11

# FIG.12

```
        ┌──────────────────────┐
        │ OPERATION PROCESSING │
        │      OF ACTUATOR     │
        └──────────────────────┘
```

IMPACT ABSORBING OPERATION

ELASTIC FORCE GENERATING OPERATION

**S2** — LOAD EXCEEDING PREDETERMINED VALUE IS APPLIED TO ACTUATOR? — NO / YES

**S4** — CALCULATE SPEED OF ACTUATOR BASED ON DETECTION SIGNAL BY ENCODER

**S6** — ESTIMATE PARAMETER OF PHYSICAL MODEL BASED ON CALCULATED SPEED

**S8** — CREATE PHYSICAL MODEL INCLUDING ESTIMATED PARAMETER

**S10** — INPUT, TO PHYSICAL MODEL, ELAPSED TIME AFTER LOAD EXCEEDING PREDETERMINED VALUE IS GIVEN, AND CALCULATE CONTROL INSTRUCTION IN PRESENT CONTROL PERIOD

**S12** — OUTPUT CALCULATED CONTROL INSTRUCTION TO DRIVER

**S14** — CONDITION SWITCHING TO ELASTIC FORCE GENERATING OPERATION IS SATISFIED? — NO / YES

**S20** — DETERMINE SPRING CONSTANT K IN CURRENT CONTROL PERIOD WITH REFERENCE TO PREVIOUSLY-SET PATTERN

**S22** — ACQUIRE CURRENT DISPLACEMENT OF ACTUATOR

**S24** — CALCULATE LOAD TO BE GENERATED BY ACTUATOR BASED ON SPRING CONSTANT K AND CURRENT DISPLACEMENT OF ACTUATOR

**S26** — CALCULATE CONTROL INSTRUCTION CORRESPONDING TO LOAD TO BE GENERATED

**S28** — OUTPUT CALCULATED CONTROL INSTRUCTION TO DRIVER

**S30** — END CONDITION OF ELASTIC FORCE GENERATING OPERATION IS SATISFIED? — NO / YES

END

26

FIG.13

(A)

(B)

FIG.14

FIG.15

FIG.16

200

152

150

154

W2

110A

W1

114

2-3

118

2-1

2-2

θ

CONTROLLER

40

(A)

(1)

W2

W1

(2)

W2

W1

(3)

W2

W1

(4)

W2

W1

(B)

30

EP 4 280 431 B1

FIG.17

```
        ┌──────────────────────┐
        │     PROCESSING IN     │
        │   ASSEMBLY DEVICE     │
        └──────────────────────┘
                   │ ←──────────────────────┐
                   ▼        ┌S100            │
             ╱──────────────╲   NO           │
            ╱ PROCESSING START╲──────────────┤
            ╲  IS INSTRUCTED?  ╱              │
             ╲────────────────╱               │
                   │ YES                       │
                   ▼          ┌S102            │
        ┌──────────────────────────────┐      │
        │ OUTPUT INSTRUCTION TO DISPOSE │      │
        │ WORKPIECE W1 ON STAGE         │      │
        │ MECHANISM AND INSTRUCTION TO  │      │
        │ ADSORB WORKPIECE W2 TO        │      │
        │ CONVEYANCE MECHANISM          │      │
        └──────────────────────────────┘      │
                   │          ┌S104            │
                   ▼                           │
        ┌──────────────────────────────┐      │
        │ OUTPUT INSTRUCTION TO BRING   │      │
        │ WORKPIECE W2 ADSORBED BY      │      │
        │ CONVEYANCE MECHANISM CLOSE    │      │
        │ TO WORKPIECE W1               │      │
        └──────────────────────────────┘      │
                   │ ←──────────────┐          │
                   ▼          ┌S106  │          │
        ┌──────────────────────────────┐      │
        │ ADJUST DISPLACEMENT OF        │      │
        │ ACTUATOR OF STAGE MECHANISM   │      │
        │ SUCH THAT WORKPIECE W1 AND    │      │
        │ WORKPIECE W2 ARE PARALLEL TO  │      │
        │ EACH OTHER BASED ON           │      │
        │ INCLINATION OF WORKPIECE W2   │      │
        │ ADSORBED BY CONVEYANCE        │      │
        │ MECHANISM                     │      │
        └──────────────────────────────┘      │
                   │          ┌S108            │
                   ▼                           │
             ╱──────────────╲                  │
            ╱SWITCHING CONDITION╲  NO           │
           ╱ SWITCHING TO WORKPIECE╲───────────┘
           ╲ APPROACH OPERATION IS ╱
            ╲    SATISFIED?       ╱
             ╲──────────────────╱
                   │ YES ←──────────┐
                   ▼          ┌S110  │
        ┌──────────────────────────────┐
        │ ADJUST DISPLACEMENT OF        │
        │ ACTUATOR OF STAGE MECHANISM   │
        │ SUCH THAT WORKPIECE W1 AND    │
        │ WORKPIECE W2 ARE MAINTAINED   │
        │ IN PARALLEL                   │
        └──────────────────────────────┘
                   │          ┌S112
                   ▼
             ╱──────────────╲
            ╱SWITCHING CONDITION╲  NO
           ╱ SWITCHING TO IMPACT ╲──────────────┐
           ╲ ABSORBING OPERATION ╱               │
            ╲  IS SATISFIED?     ╱                │
             ╲──────────────────╱                │
                   │ YES                          │
```

┌S114
```
        ┌──────────────────────────────┐
        │ IMPACT ABSORBING              │
        │ OPERATION                     │
        │ (PIECES OF PROCESSING         │
        │ RELATED TO STEPS S2           │
        │ TO S14 IN FIG. 12)            │
        └──────────────────────────────┘
                   │          ┌S116
                   ▼
        ┌──────────────────────────────┐
        │ ELASTIC FORCE                 │
        │ GENERATING OPERATION          │
        │ (PIECES OF PROCESSING         │
        │ RELATED TO STEPS S20          │
        │ TO S28 IN FIG. 12)            │
        └──────────────────────────────┘
                   │          ┌S118
                   ▼
        ┌──────────────────────────────┐
        │ OUTPUT INSTRUCTION TO         │
        │ CONVEY SUPERIMPOSED           │
        │ WORKPIECES W1 AND W2 TO       │
        │ NEXT PROCESS                  │
        └──────────────────────────────┘
                   │
                   ▼
             ┌───────────┐
             │    END    │
             └───────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006074987 A
- JP 2006125633 A
- JP 2013521443 A
- JP 4296110 B
- US 2018157236 A1
- JP 5845884 B
- JP 2020175729 A